# EUROPÄISCHE PATENTSCHRIFT

(11) **EP 1 986 772 B1**
(45) Veröffentlichungstag und Bekanntmachung des Hinweises auf die Patenterteilung: **30.05.2018**
(21) Anmeldenummer: 07704398.2
(22) Anmeldetag: 07.02.2007
(51) Int. Cl.: B01J 20/06, B01J 20/30, B01J 20/34, B01D 53/02, B01J 23/80

(54) **ADSORPTIONSMASSE UND VERFAHREN ZUR ENTFERNUNG VON CO AUS STOFFSTRÖMEN**
ADSORPTION COMPOSITION AND PROCESS FOR REMOVAL OF CO FROM MATERIAL STREAMS
MASSE D'ADSORPTION ET PROCÉDÉ POUR ÉLIMINER LE CO PRÉSENT DANS DES FLUX DE MATIÈRE

(30) Priorität: 14.02.2006 EP 06101654
(43) Veröffentlichungstag der Anmeldung: 05.11.2008
(73) Patentinhaber: BASF SE, 67056 Ludwigshafen am Rhein (DE)
(72) Erfinder: SCHLITTER, Stephan, 67117 Limburgerhof (DE); HATSCHER, Stephan, 28857 Syke (DE); HESSE, Michael, 67549 Worms (DE); URTEL, Heiko, 68165 Mannheim (DE)
(74) Vertreter: BASF IP Association
(86) Internationale Anmeldenummer: PCT/EP2007/051140
(87) Internationale Veröffentlichungsnummer: WO 2007/093526

(56) Entgegenhaltungen:
- EP-A1- 0 296 734
- WO-A-95/21146
- WO-A-96/14280
- DE-A1- 10 241 529
- DE-A1- 19 848 595
- DE-A1- 19 950 325
- US-A- 3 676 516
- US-A- 4 552 861
- US-A- 4 835 132
- US-A- 5 328 672

## Beschreibung

Die vorliegende Erfindung betrifft eine Adsorptionsmasse und ein Verfahren zur Entfernung von CO aus Stoffströmen. Insbesondere betrifft die Erfindung eine Adsorptionsmasse und ein Verfahren zur Entfernung von Kohlenmonoxid aus Kohlenwasserstoffströmen.

In verschiedenen Gebieten der Technik ist es wichtig, besonders reine Stoffströme zur Verfügung zu haben. "Rein" bedeutet in diesem Zusammenhang, dass der Stoffstrom frei von Bestandteilen ist, die bei der bestimmungsgemäßen Verwendung des Stoffstroms störend wirken. Ein Beispiel ist Atemluft, die frei von toxischen Verbindungen sein muss. Ebenso werden etwa bei der Herstellung von elektronischen Bauteilen reine Stoffströme benötigt, um keine Kontaminationen einzuschleppen, die die elektronischen Eigenschaften der hergestellten Bauteile beeinträchtigen, unter anderem wird dabei oft besonders reiner Stickstoff oder besonders reines Argon als Schutzgas benötigt. Ein anderes Beispiel sind katalytische chemische Reaktionen. Katalysatoren sind oft sehr empfindlich gegen Vergiftungen. Da man aus wirtschaftlichen Gründen üblicherweise den pro Volumen oder Masse des Katalysators einzusetzenden Einsatzstoffstrom zu maximieren sucht, können schon außerordentlich kleine Mengen an Verunreinigungen im Einsatzstoffstrom sich auf dem Katalysator ansammeln und diesen vergiften. Typischerweise werden für Olefinpolymerisationsreaktionen an modernen Katalysatoren - beispielsweise Metallocenkatalysatoren - Olefinströme benötigt, die nicht mehr als einige ppb (parts per billion, d.h., 10⁻⁹ Anteile Verunreinigungen pro Anteil des gewünschten Stoffs) enthalten ("polymer grade"-Olefine). Aus typischen Olefinquellen (Steamcracker, Fluid Catalytic Cracker, Dehydrierungen, MTO-Verfahren ("Methanol to Olefins") stammende Olefine enthalten meist sehr viel höhere Anteile (ppm- oder sogar Promille-Bereich) an Verunreinigungen wie Kohlenmonoxid oder Sauerstoff ("chemical grade"); diese Anteile müssen vor der Verwendung zur Polymerisation entsprechend erniedrigt werden.

Typischerweise sind die zu reinigenden Stoffströme Luft, Stickstoff oder Argon oder Kohlenwasserstoffe wie Ethylen, Propylen, 1-Buten, 2-Buten, 1,3-Butadien oder Styrol. Typische Verunreinigungen, die in aller Regel entfernt werden müssen, sind Sauerstoff und Kohlenmonoxid, und oft auch Wasser, Kohlendioxid, Wasserstoff, oder auch Schwefel-, Arsen- oder Antimonverbindungen. Verfahren zur Entfernung solcher Verunreinigungen aus Stoffströmen sind bekannt.

Am bekanntesten ist die Entfernung von Kohlenmonoxid aus sauerstoffhaltigen Gasströmen, beispielsweise aus Atemluft. Dies geschieht meist durch katalytische Umsetzung von Kohlenmonoxid mit Sauerstoff, in der Regel an Kupfer enthaltenden Katalysatoren. Der meistverwendete Katalysator dieser Reaktion ist Hopcalit, ein ursprünglich für die CO-Entfernung aus Atemluft in Atemmasken entwickeltes, für die Umsetzung von Kohlenmonoxid mit Sauerstoff höchst aktives Kupfer-Mangan-Mischoxid, an dem sich das hochtoxische Kohlenmonoxid mit Sauerstoff zu Kohlendioxid umsetzt.

Es sind jedoch auch andere Verwendungen von Hopcalit und Verfahren zur Reinigung anderer Stoffströme als Atemluft bekannt. So offenbart WO 98/041 597 A1 ein Verfahren zur Entfernung von Alkinen, einfach oder mehrfach ungesättigten Kohlenwasserstoffen, Schwefel-, Antimon- oder Arsenverbindungen, Sauerstoff, Wasserstoff und Kohlenmonoxid aus Stoffströmen durch eine Abfolge von zwei oder drei bestimmten katalytischen und absorptiven Verfahrensschritten. EP 662 595 A1 lehrt ein Verfahren zur Entfernung von Wasserstoff, Kohlenmonoxid und Sauerstoff aus kaltem flüssigem Stickstoff durch Inkontaktbringen mit bestimmten Zeolithen oder anderen Metalloxiden, insbesondere Hopcalit. EP 750 933 A1 offenbart ein ähnliches Verfahren zur Entfernung von Sauerstoff und Kohlenmonoxid aus kaltem Stickstoff oder kalten Edelgasen durch Inkontaktbringen mit Metalloxiden, insbesondere Hopcalit. Bei den angewendeten tiefen Temperaturen unterhalb von -40 °C findet allerdings keine oder nur wenig katalytische Reaktion statt, Sauerstoff und Kohlenmonoxid werden am Hopcalit adsorbiert und reagieren erst bei höherer Temperatur ab, es sei denn, sie werden in der Kälte in einem Desorptionsschritt entfernt. EP 820 960 A1 offenbart ein Verfahren zur Entfernung von Sauerstoff und Kohlenmonoxid aus Stickstoff oder Edelgasen durch Inkontaktbringen mit Metalloxiden wie Hopcalit, insbesondere bei Temperaturen von 5 bis 50 °C.

T.-J Huang und D.-H. Tsai, Catalysis Letters 87 (2003) 173-178 berichten über Untersuchungen zum Einfluss des Oxidationsgrads des Kupfers auf die Oxidation von Kohlenmonoxid. Cu₂O ist insgesamt aktiver als CuO, was auf die höhere Beweglichkeit von Sauerstoff in Cu₂O, verglichen mit Cu oder CuO zurückgeführt wird.

WO 02/094 435 A1 lehrt ein Verfahren zum oxidativen Entfernen von CO aus Ethylen bei Temperaturen im Bereich von 70 bis 110 °C an Kupfer und Zink enthaltenden Katalysatoren.

WO 02/026 619 A2 offenbart ein Verfahren zur Entfernung von Kohlenmonoxid durch Wassergas-Shift-Reaktion und WO 03/051 493 A2 ein Verfahren zur selektiven Oxidation von Kohlenmonoxid, jeweils in Gasströmen, die Kohlenmonoxid, Sauerstoff und Wasserstoff enthalten, insbesondere in Brennstoffzellen, und jeweils an Katalysatoren, die Kupfer, ein Metall der Platingruppe und ein reduzierbares Metalloxid auf einem oxidischen Träger aus aktiviertem Aluminium, Zirkondioxid, Titandioxid, Siliciumdioxid, Zeolithen oder ihre Kombinationen enthalten. Das reduzierbare Metalloxid wird aus der Gruppe der Oxide von Cr, V, Mo, Ce, Pr, Nd, Ti, Ni, Mn, Co und ihren Kombinationen gewählt. US 6 238 640 B1 beschreibt ein Verfahren zur Entfernung von Kohlenmonoxid aus Wasserstoff enthaltenden Gasströmen durch Umsetzung mit Dampf und Sauerstoff zu Kohlendioxid und Wasserstoff in Gegenwart eines Katalysators, der Kupfer- und Aluminiumoxid sowie mindestens ein Metalloxid aus der von Zinkoxid, Chromoxid und Magnesiumoxid gebildeten Gruppe enthält.

Bei diesen Verfahren zur Entfernung von Kohlenmonoxid in Gegenwart von Sauerstoff durch deren Umsetzung entsteht Kohlendioxid. Dies kann in nachfolgenden Verfahren inert sein oder selbst eine störende Verunreinigung darstellen. Im letzteren Fall wird es entfernt, auch hierfür sind verschiedene Verfahren bekannt. Beispielsweise lehrt CA 2 045 060 A1 ein Verfahren zur Entfernung von Kohlenmonoxid, Kohlendioxid, Wasserstoff, Sauerstoff und Wasserdampf aus Inertgasströmen bei einer Temperatur im Bereich von -30 °C bis + 40 °C, insbesondere von -30 °C und 0 °C, wobei Kohlenmonoxid an Übergangsmetalloxiden wie Hopcalit oder Kupfer-Kobalt-Oxid zu Kohlendioxid umgesetzt wird und letzteres durch Adsorption an Kupfer auf einem Aluminiumoxidträger oder Nickel auf einem Aluminiumoxid- oder Siliciumdioxid-Träger entfernt wird.

Bei manchen Anwendungen muss Kohlenmonoxid jedoch auf andere Weise als durch Umsetzung mit Sauerstoff oder Wasser entfernt werden, beispielsweise dann, wenn zwar Kohlenmonoxid, aber kein Sauerstoff, kein Wasser oder lediglich ein stöchiometrischer Unterschuss davon im zu reinigenden Stoffstrom enthalten ist. In manchen Anwendungsfällen muss Sauerstoff vor dem Kohlenmonoxid entfernt werden, insbesondere dann, wenn neben der Bildung von Kohlendioxid auch sonstige störende Nebenprodukte gebildet werden können. Beispielsweise können bei der Entfernung von Sauerstoff und Kohlenmonoxid an Kupfer enthaltenden Katalysatoren aus flüssigen Kohlenwasserstoffen wie Propylen, Buten, Butadien oder Styrol auch Oxidationsprodukte des Kohlenwasserstoffs gebildet werden (sogenannte "Oxygenate"), die selbst störende Verunreinigungen darstellen. In solchen Fällen muss der Sauerstoff vor der Entfernung des Kohlenmonoxids entfernt werden, und Kohlenmonoxid kann nicht durch Oxidation entfernt werden.

In solchen Fällen wird Kohlenmonoxid daher üblicherweise durch Destillation entfernt, damit ist jedoch keine CO-Entfernung bis auf Restgehalte im ppb-Bereich möglich. Es sind aber auch adsorptive Verfahren und Adsorbentien zur Reinigung von Stoffströmen bekannt. Die deutsche Offenlegungsschrift DE 1 929 977 lehrt 20 bis 60 Teile CuO auf 100 Teile ZnO enthaltende Katalysatoren und ihre Verwendung zur Entfernung von CO aus Ethylen- und Propylenströmen bei einer Temperatur im Bereich von 50 bis 200 °C. US 3 676 516 lehrt einen geträgerten Cu-Katalysator, dessen Kupfer zu 20 bis 95 % als Cu²⁺ vorliegt, und seine Verwendung zur CO-Entfernung aus Ethylen- oder Propylenströmen bei einer Temperatur unterhalb von rund 200 °C, in den Beispielen konkret bei rund 93 °C. US 4 917 711 offenbart ein Adsorbens, das eine Kupferverbindung auf einem hochoberflächigen Träger enthält, jedoch auch Olefine adsorbiert und daher nur zur Reinigung von Stickstoff, Edelgasen und gesättigten Kohlenwasserstoffen geeignet ist. WO 01/007 383 A1 lehrt ein Verfahren zur Reinigung von Olefinströmen durch Überleiten über poröse Adsorbentien wie Ruß oder Aluminium- und/oder Siliciumoxide. JP 02 144 125 A2 (CAS Abstract 113:177 506) lehrt ein Verfahren zur Entfernung von Kohlenmonoxid und Metallcarbonylen aus bei der Halbleiterfertigung entstehenden Abgasen durch Adsorption an Manganoxid und Kupferoxid enthaltenden Adsorptionsmassen. JP 05 337 363 A2 (CAS Abstract 120:274 461) offenbart Adsorbentien zur Kohlenmonoxidentfernung, die Palladium und weitere Oxide auf einem Träger enthalten, wobei die Oxide aus den Oxiden der Elemente der Gruppen 11, 2 und 12 (ohne Be, Cd, Hg und Ra), 13 (ohne Al, Tl und den Actiniden), 14 (ohne C, Si, Pb und Hf), 5 und 15 (ohne N, P, As und die "Pa-Reihe"), 6 und 16 (ohne O, S, Se und U), 7 und 8 des Periodensystems der Elemente gewählt werden.

WO 95/021 146 A1 lehrt ein Verfahren zur Entfernung von Kohlenmonoxid und, falls vorhanden, auch Arsin aus flüssigen Kohlenwasserstoffströmen durch Inkontaktbringen mit einem Sorbens, das je nach Ausführungsform disperses Kupfer in den Oxidationstufen 0, +1 oder +2, und in bestimmten Fällen auch Mangandioxid enthält.
EP 537 628 A1 offenbart ein Verfahren zur Entfernung von Kohlenmonoxid aus alpha-Olefinen und gesättigten Kohlenwasserstoffen durch Inkontaktbringen mit einem Katalysatorsystem auf Basis mindestens eines Oxids eines aus Cu, Fe, Ni, Co, Pt und Pd gewählten Metalls und mindestens eines Oxids eines aus den Gruppen 5, 6 oder 7 des Periodensystems der Elemente gewählten Metalls bei 0 bis 150 °C. US 4713 090 beschreibt ein Adsorbens zur Gewinnung hochreinen Kohlenmonoxids durch Druck- oder Temperaturwechseladsorption. Das Adsorbens umfasst einen zusammengesetzten Träger mit einem Kern aus Silicium- oder Aluminiumoxid und einer Außenschicht aus einer Aktivkohle, auf der eine Kupferverbindung geträgert ist.

WO 2004/022 223 A2 lehrt eine Kupfer, Zink, Zirkon und wahlweise Aluminium enthaltende Adsorptionsmasse und ihre Verwendung zur Entfernung von CO aus Stoffströmen in vollständig reduziertem Zustand.

Kupferhaltige Katalysatoren sind auch zu anderen Anwendungszwecken als zur Entfernung von CO aus Inertgasen oder Kohlenwasserstoffen bekannt. US 4 593 148 und US 4 871 710 offenbaren zur Entschwefelung und Entarsenierung and Cu/Zn-Katalysatoren. WO 95/023 644 A1 lehrt einen Kupferkatalysator zur Hydrierung von Kohlenoxiden, beispielsweise zu Methanol, oder für die sogenannte shift-Reaktion von Kohlenmonoxid mit Wasser zu Kohlendioxid und Wasserstoff, der neben dispersem Kupfer auch Stabilisatoren wie Siliciumdioxid, Aluminiumoxid, Chromoxid, Magnesiumoxid und/oder Zinkoxid und wahlweise auch einen Träger wie Aluminiumoxid, Zirkondioxid, Magnesiumoxid und/oder Siliciumdioxid enthält, und seine Aktivierung und Passivierung. DE 198 48 595 A1 offenbart einen Katalysator zur Lachgaszersetzung der allgemeinen Formel MₓAl₂O₄, in denen M Cu oder eine Mischung aus Cu und Zn und/oder Mg ist und der weitere Dotierungen, insbesondere Zr und/oder La enthalten kann. US 5 328 672 lehrt einen Autoabgasreinigungskatalysator, der aus einem ein Übergangsmetall enthaltenden Oxid und einem ein Übergangsmetall enthaltenden Zeolith besteht, wobei das Übergangsmetall aus Cu, Co, Ni, Cr, Fe, Mn, Ag, Zn, Ca und "kompatiblen Mischungen davon" gewählt wird, vorzugsweise in Oxid und Zeolith identisch und besonders bevorzugt Cu ist und das Oxid aus La-, Ti-, Si-, Zr-Oxid gewählt wird und vorzugsweise ZrO₂ ist. EP 804 959 A1 offenbart einen NOₓ-Zersetzungskatalysator, der zusätzlich zu Kupfer und einem MFI-Zeolith auch SiO₂, Al₂O₃, SiO₂/Al₂O₃, MgO, ZrO₂ und Ähnliches sowie beliebige weitere Elemente wie die Übergangselemente Pt, Rh, Cr, Co, Y, Zr, V, Mn, Fe und Zn sowie Ga, In, Sn, Pb, P, Sb, Mg und Ba, bevorzugt P enthalten kann. DE 199 50 325 A1 lehrt einen Spinellmonolithkatalysator zur NOₓ-Zersetzung mit der allgemeinen Formel AₓB₍₁₋ₓ₎E₂O₄, in der A Cu ist, das bis zur Hälfte durch Co, Fe, Ni, Mn oder Cr ersetzt sein kann; B mindestens ein Element, ausgewählt aus Zn, Mg, Ca, Zr, Ce, Sn, Ti, V, Mo und W ist und E Al ist, das bis zur Hälfte durch Fe, Cr, Ga, La oder deren Gemische ersetzt sein kann.
US 4 552 861 lehrt ein Herstellverfahren für Katalysatoren, die Cu, Zn, Al und mindestens ein Element aus der von den Seltenen Erden und Zirkon gebildeten Gruppe enthalten sowie deren Verwendung zur Methanolsynthese. Die in US 4 780 481 offenbarten Methanolkatalysatoren enthalten Cu, Zn und mindestens ein Alkali- oder Erdalkalimetall, Edelmetalle und/oder Seltene Erden, wobei Zn teilweise durch Zr ersetzt werden kann. WO 96/014 280 A1 lehrt Katalysatoren, die Cu, Zn und mindestens eine Verbindung von Al, Zr, Mg, eines Seltenerdmetalls und/oder Mischungen davon enthalten und ihre Verwendung zur Hydrierung von Carbonsäureestern. EP 434 062 A1 lehrt ebenfalls ein Verfahren zur Hydrierung von Carbonsäureestern an einem Katalysator, umfassend Cu, Al und ein aus der von Mg, Zn, Ti, Zr, Sn, Ni, Co und ihren Mischungen gebildeten Gruppe gewähltes Metall. US 4 835 132 beschreibt CO-Shift-Katalysatoren, die aus einem Vorläufer der Formel (Cu+Zn)₆AlₓR_{y}(CO₃)_{(x-y)/2}OH_{12+2(x+y})nH₂O mit Schichtstruktur durch Kalzination erzeugt werden, wobei R La, Ce oder Zr ist, x mindestens 1 und höchstens 4, y mindestens 0,01 und höchstens 1,5 und n ungefähr 4 ist.

Es sind auch Verfahren bekannt, Katalysatoren, auch Kupfer enthaltende, zu aktivieren, zu reaktivieren oder für den Transport zu passivieren. Die Patentschrift DD 0 153 761 betrifft ein Verfahren zur Aktivierung oder Reaktivierung von Eisenmolybdat-Redoxkatalysatoren, die auch Kupfer enthalten können, wobei die Katalysatoren zuerst in nichtoxidierender Atmosphäre kalziniert und dann mit einem oxidierenden Gas in Kontakt gebracht werden. DE 199 63 441 A1 lehrt ein Verfahren zur Regenerierung von Kupfer enthaltenden Hydrierkatalysatoren durch zuerst oxidierende und dann reduzierende Behandlung, wobei die Reduzierung vorzugsweise erst im Hydrierreaktor durchgeführt wird. WO 02/068 119 A1 offenbart kupferhaltige Hydrier- und Dehydrierkatalysatoren, die in reduziertem Zustand eingesetzt und zum Transport durch teilweise Oxidation des Kupfers passiviert werden. EP 296 734 A1 beschreibt Kupfer enthaltende Shift- oder Methanolkatalysatoren, die durch Reduktion bei einer Temperatur unterhalb von 250 °C eine Cu-Oberfläche von mindestens 70 m²/g, bezogen auf Kupfer aufweisen. Derartige Aktivierungs-, Regenerierungs- und Passivierungsverfahren sind auch für andere Katalysatoren bekannt, so offenbart etwa JP 55/003 856 A (WPI-Abstract No. WP198013664C) ein Verfahren zur Aktivierung von Katalysatoren auf Palladiumbasis durch Reduzierung mit Methanol, Oxidation mit Sauerstoff, dann mit Essigsäure und Sauerstoff und abschießende Reduktion mit Wasserstoff.
WO 03/002 252 A1 beschreibt ein Aktivierungsverfahren für einen Kobalt enthaltenden Katalysator durch Behandlung mit Kohlenwasserstoff.

Die steigenden Anforderungen an die Reinheit von Stoffströmen für manche Anwendungsgebiete machen jedoch neue und verbesserte Hilfsmittel und Verfahren zur Entfernung von Verunreinigungen notwendig. Insbesondere problematisch ist die Entfernung von Kohlenmonoxid aus Kohlenwasserstoffen, und dort besonders aus typischerweise in flüssiger Form vorliegenden Kohlenwasserstoffen wie Propen, 1- oder 2-Buten. Dieser Erfindung liegt daher die Aufgabe zu Grunde, ein verbessertes Adsorptionsmittel und ein verbessertes Verfahren zur adsorptiven Entfernung von Kohlenmonoxid aus Stoffströmen zu finden.

Demgemäß wurde eine Kupfer-, Zink- und Zirkonoxide enthaltende Adsorptionsmasse gefunden, die dadurch gekennzeichnet ist, dass das ihr Kupfer enthaltender Anteil einen Reduktionsgrad, ausgedrückt als Gewichtsverhältnis von metallischem Kupfer zur Summe aus metallischem Kupfer und Kupferoxiden, gerechnet als CuO von mindestens 45 % und höchstens 75 % aufweist. Ferner wurden Verfahren zur Entfernung von Kohlenmonoxid aus Stoffströmen gefunden, die durch die Verwendung der erfindungsgemäßen Adsorptionsmasse als Adsorptionsmasse, aber alternativ auch durch deren Verwendung als Katalysator der Umsetzung von Kohlenmonoxid mit Sauerstoff oder als Reaktionspartner des Kohlenmonoxids gekennzeichnet sind. Insbesondere wurde ein Verfahren zur Entfernung von Kohlenmonoxid aus Stoffströmen durch Adsorption gefunden, das dadurch gekennzeichnet ist, dass man den Kohlenmonoxid enthaltenden Stoffstrom mit einer Adsorptionsmasse in Kontakt bringt, die Kupfer-, Zink- und Zirkonoxide enthält und dadurch gekennzeichnet ist, dass das ihr Kupfer enthaltender Anteil einen Reduktionsgrad, ausgedrückt als Gewichtsverhältnis von metallischem Kupfer zur Summe aus metallischem Kupfer und Kupferoxiden, gerechnet als CuO, von mindestens 45 % und höchstens 75 % aufweist.

Die erfindungsgemäße Adsorptionsmasse ist gut geeignet zur Anwendung in Verfahren zur Reinigung von Stoffströmen, insbesondere zur Entfernung von Kohlenmonoxid (CO) aus flüssigen Kohlenwasserstoffen wie Propylen. Ein besonderer Vorteil der erfindungsgemäßen Adsorptionsmasse ist ihre gute Regenerierbarkeit. Die erfindungsgemäße Adsorptionsmasse weist zwar nicht die maximal mögliche Adsorptionskapazität derartiger Zusammensetzungen für CO auf, sie ist jedoch erheblich besser regenerierbar als Zusammensetzungen mit höherer CO-Aufnahmefähigkeit. Sie ist damit hervorragend geeignet, in Anlagen mit zwei Adsorbern, von denen jeweils einer zur Adsorption eingesetzt und einer regeneriert wird, auch Stoffströme mit stark schwankendem CO-Gehalt von CO zu befreien.

Der Reduktionsgrad ist ein Maß für den Oxidgehalt des in der erfindungsgemäßen Adsorptionsmasse enthaltenen Kupfers. Der Reduktionsgrad wird bestimmt als Gewichtsverhältnis von metallischem Kupfer, d.h. Kupfer in der Oxidationsstufe 0 (Cu⁰), zur Summe aus metallischem Kupfer und Kupferoxiden, gerechnet als CuO, d.h. Kupfer in der Oxidationsstufe +2 (Reduktionsgrad [%] = Masse Cu⁰ · 100 / (Masse Cu⁰ + Masse CuO)). Rein metallisches Kupfer hätte einen Reduktionsgrad von 100 %, reines CuO einen von 0%. Ein bestimmter Reduktionsgrad bedeutet jedoch nicht notwendigerweise, dass die erfindungsgemäße Adsorptionsmasse metallisches Kupfer oder CuO enthält. Ein bestimmter Reduktionsgrad kann sich durch jede beliebige mögliche Kombination entsprechender Anteile von metallischem Kupfer, Cu₂O oder CuO ergeben. Reines Cu₂O, d.h., Kupfer in der Oxidationsstufe +1, ist formal ein äquimolares Gemisch aus Cu und CuO und hat demnach einen Reduktionsgrad von 44,4 %. Bestimmt wird der Reduktionsgrad mit jedem Verfahren, das in der Lage ist, Kupfer in seinen verschiedenen Oxidationsstufen quantitativ zu bestimmen. Besonders einfach ist jedoch die vollständige Oxidation des Kupfers in einer Probe der Adsorptionsmasse durch Inkontaktbringen mit Luft bei einer Temperatur von mindestens 250 °C sowie höchstens 500 °C bis zur Gewichtskonstanz, die im Normalfall nach mindestens 10 Minuten und höchstens 12 Stunden erreicht sein sollte. Der Reduktionsgrad der Probe wird aus der Gewichtszunahme der Probe unter der Annahme, das hinzugekommene Gewicht sei ausschließlich Sauerstoff und unter Annahme einer Stöchiometrie der Oxidation von

2 Cu + O₂ -> 2 CuO

berechnet.

Der Reduktionsgrad liegt im Allgemeinen bei mindestens 45 %, vorzugsweise bei mindestens 50 % und in besonders bevorzugter Form bei mindestens 55 % sowie im Allgemeinen bei höchstens 75 %, vorzugsweise höchstens 70 % und in besonders bevorzugter Form bei höchstens 65 %. Beispiele für geeignete, besonders bevorzugte Reduktionsgrade sind 56 %, 57 %, 58 %, 59 %, 60%, 61 %, 62 %, 63 % oder 64 %.

Die erfindungsgemäße Adsorptionsmasse wirkt im erfindungsgemäßen adsorptiven Verfahren durch Adsorption. Unter Adsorption wird die Anlagerung eines Adsorbats an die Oberfläche einer Adsorptionsmasse ("Adsorbens") bezeichnet, die im Allgemeinen durch Desorption reversibel ist. Das Adsorbat kann am Adsorbens auch chemisch umgesetzt werden, bleibt das Adsorbens dabei chemisch im wesentlichen unverändert, spricht man von Katalyse (Beispiel: das bekannte Verfahren zur Umsetzung von CO mit Sauerstoff an einem metallischem Kupferkatalysator zu Kohlendioxid), setzt sich das Adsorbat chemisch mit dem Adsorbens um, von Absorption (Beispiele: das bekannte Verfahren zur Entfernung von Sauerstoff aus Gasströmen durch Inkontaktbringen mit metallischem Kupfer unter Bildung von Kupfer(I)oxid und/oder Kupfer(II)oxid; oder das bekannte Verfahren zur Entfernung von Kohlenmonoxid aus Gasströmen durch Inkontaktbringen mit Kupfer(I)oxid und/oder Kupfer(I)oxid unter Bildung von Kohlendioxid und metallischen Kupfer). Bei einer reinen Adsorption wie auch bei der Katalyse wird das Adsorbat oder sein Reaktionsprodukt durch Desorption wieder von der Oberfläche entfernt, bei der Absorption ist meist eine chemische Regenerierung des Absorbens nötig. Sowohl bei der Katalyse als auch bei der Absorption ist der einleitende Schritt jedenfalls eine Adsorption, und ob ein adsorptives Reinigungsverfahren letztendlich (z. B. bei der Regenerierung der Adsorptionsmasse) in einem katalytischen oder einem absorptiven Schritt mündet oder ein rein adsorptives Verfahren vorliegt, hängt vom Einzelfall ab. Im Rahmen der vorliegenden Erfindung bedeutet "adsorptiv", dass während der Entfernung von CO aus dem zu reinigenden Stoffstrom kein Reaktionsprodukt des Kohlenmonoxids in den Stoffstrom abgegeben wird, und die verwendete Adsorptionsmasse chemisch im wesentlichen unverändert bleibt, also ihre Zusammensetzung nicht oder nur in unwesentlicher Weise ändert. Ob bei der Regenerierung des erfindungsgemäßen Adsorbens dagegen Kohlenmonoxid oder ein Umsetzungsprodukt davon abgegeben werden, also Katalyse stattfindet oder nicht, ist für die Erfindung unerheblich.

Adsorptionsmassen oder Absorptionsmassen werden umgangssprachlich oft auch als "Katalysatoren" bezeichnet, ohne bei ihrem bestimmungsgemäßen Einsatz tatsächlich katalytisch zu wirken.

Die erfindungsgemäße Adsorptionsmasse enthält Kupfer-, Zink- und Zirkonoxide. Kupfer kann teilweise auch als metallisches Kupfer vorliegen und liegt ansonsten in Form von Cu(I)- und Cu(II)-Oxiden vor. In Reinform enthält die erfindungsgemäße Adsorptionsmasse im Allgemeinen Kupfer in einer Menge, die als CuO gerechnet mindestens 30 Gew.-%, vorzugsweise mindestens 50 Gew.-% und in besonders bevorzugter Weise mindestens 60 Gew.-%, sowie im Allgemeinen höchstens 99,8 Gew.-%, vorzugsweise höchstens 90 Gew.-% und in besonders bevorzugter Weise höchstens 80 Gew.-% Kupferoxid CuO, jeweils bezogen auf die Gesamtmenge der Adsorptionsmasse entspricht. Die erfindungsgemäße Adsorptionsmasse enthält in Reinform im Allgemeinen Zinkoxid ZnO in einer Menge von mindestens 0,1 Gew.-%, vorzugsweise mindestens 5 Gew.-% und in besonders bevorzugter Weise mindestens 10 Gew.-% sowie im Allgemeinen höchstens 69,9 Gew.-%, vorzugsweise höchstens 40 Gew.-% und in besonders bevorzugter Weise höchstens 30 Gew.-%, jeweils bezogen auf die Gesamtmenge der Adsorptionsmasse. Sie enthält in Reinform ferner im Allgemeinen Zirkondioxid ZrO₂ in einer Menge von mindestens 0,1 Gew.-%, vorzugsweise mindestens 3 Gew.-% und in besonders bevorzugter Weise mindestens 5 Gew.-% sowie im Allgemeinen höchstens 69,9 Gew.-%, vorzugsweise höchstens 30 Gew.-% und in besonders bevorzugter Weise höchstens 20 Gew.-%, jeweils bezogen auf die Gesamtmenge der Adsorptionsmasse. Der Zirkondioxidanteil in der Adsorptionsmasse kann teilweise durch Aluminiumoxid Al₂O₃ ersetzt werden. Beispielsweise können mindestens 1 %, mindestens 10 % oder mindestens 30 % sowie höchstens 90 %, höchstens 80 % oder höchstens 70 % des Zirkondioxidanteils in der Adsorptionsmasse durch Aluminiumoxid ersetzt werden. "Reinform" bedeutet im Rahmen dieser Erfindung, dass außer den Kupfer(oxid)- Zinkoxid- und Zirkondioxid- (dieser wahlweise zum Teil durch Aluminiumoxid ersetzt) -Anteilen keine weiteren Bestandteile enthalten sind, abgesehen von unwesentlichen Bestandteilen, die beispielsweise noch aus der Fertigung mitgeschleppt werden, wie Überreste von Ausgangsstoffen und Reagenzien, Hilfsstoffe zur Formgebung und Ähnliches. "Reinform" bedeutet also, dass die Adsorptionsmasse im wesentlichen aus den genannten Komponenten besteht.

Die prozentualen Mengen der Komponenten der Adsorptionsmasse addieren sich stets zu 100 Gew.-%.

Eine sehr gut geeignete Adsorptionsmasse besteht in Reinform beispielsweise aus ca. 70 Gew.-% CuO, ca. 20 Gew.-% ZnO und ca. 10 Gew.-% ZrO₂, wobei sich deren Anteile zu 100 Gew.-% addieren.

Die erfindungsgemäße Adsorptionsmasse kann, muss aber nicht unbedingt in Reinform vorliegen. Es ist möglich, sie mit Hilfsstoffen zu vermischen oder sie auf einen inerten Träger aufzubringen. Geeignete inerte Träger sind die bekannten Katalysatorträger wie beispielsweise Aluminiumoxid, Siliciumdioxid, Zirkondioxid, Alumosilikate, Tone, Zeolithe, Kieselgur und Ähnliche.

Die erfindungsgemäße Adsorptionsmasse wird hergestellt wie bekannte oxidische Katalysatoren. Ein bequemes und bevorzugtes Verfahren zur Herstellung der erfindungsgemäßen Adsorptionsmasse umfasst die folgenden Verfahrensschritte in der genannten Reihenfolge:
a) Herstellen einer Lösung der Komponenten der Adsorptionsmasse und/oder von löslichen Ausgangsverbindungen davon;
b) Fällen eines Festkörpers aus dieser Lösung durch Zugabe einer Base;
c) Abtrennung und Trocknung des Festkörpers;
d) wahlweise eine Kalzination des Festkörpers;
e) Verformung des Festkörpers zu Formkörpern; und
f) wahlweise eine Kalzination der Formkörper;
mit der Maßgabe, dass mindestens einer der beiden Kalzinationsschritte d) oder f) durchgeführt wird, wobei nach oder gleichzeitig mit Schritt f) Schritt
g) Einstellung des Reduktionsgrads des Kupfer enthaltenden Anteils der Adsorptionsmasse, ausgedrückt als Gewichtsverhältnis von metallischem Kupfer zur Summe aus metallischem Kupfer und Kupferoxiden, gerechnet als CuO, auf einen Wert von mindestens 45 % und höchstens 75 % durch Behandlung mit einem Kupferoxid reduzierenden Reduktionsmittel und/oder einem Kupfer oxidierenden Oxidationsmittel durchgeführt wird.

Im ersten Verfahrensschritt, Schritt a), wird in üblicher Weise eine Lösung der Komponenten der Adsorptionsmasse hergestellt, beispielsweise durch Lösen in einer Säure wie Salpetersäure. Wahlweise werden statt der Komponenten der Adsorptionsmasse auch deren Ausgangsverbindungen verwendet, beispielsweise die Nitrate, Carbonate, Hydroxicarbonate der Metalle in einer wässrigen Lösung, die auch sauer, beispielsweise salpetersauer sein kann, gelöst. Das Mengenverhältnis der Salze in der Lösung wird gemäß der gewünschten Endzusammensetzung der Adsorptionsmasse stöchiometrisch berechnet und eingestellt.

Aus dieser Lösung wird im Schritt b) ein Festkörper als Vorläufer der Adsorptionsmasse gefällt. Dies erfolgt in üblicher Weise, vorzugsweise durch Erhöhung des pH-Werts der Lösung durch Zugabe einer Base, etwa durch Zugabe von Natronlauge oder Sodalösung.

Das entstehende feste Fällprodukt wird vor der Trocknung in Schritt c) in der Regel von der überstehenden Lösung abgetrennt, etwa durch Filtrieren oder Dekantieren, und mit Wasser frei von löslichen Bestandteilen wie Natriumnitrat gewaschen. Das Fällprodukt wird dann normalerweise vor der Weiterverarbeitung mit üblichen Trocknungsmethoden getrocknet. Im allgemeinen genügt dazu eine Behandlung bei leicht erhöhter Temperatur, etwa mindestens 80 °C, vorzugsweise mindestens 100 °C und in besonders bevorzugter Weise mindestens 120 °C statt, über einen Zeitraum von 10 min bis 12 Stunden, vorzugsweise 20 min bis 6 Stunden und in besonders bevorzugter Weise 30 min bis 2 Stunden. Es ist auch möglich und besonders bequem, das Produkt der Fällung direkt - ein gewisser Alkali-, zum Beispiel Natriumgehalt der Adsorptionsmasse stört im Allgemeinen nicht - oder nach Waschen durch Sprühtrocknung zu einem trockenen weiterverarbeitungsfähigen Pulver umzuwandeln.

Im Anschluss an die Trocknung wird das gefällte und getrocknete Vorprodukt der Adsorptionsmasse wahlweise dem Kalzinationsschritt d) unterzogen. Die angewendete Kalzinationstemperatur liegt dabei im Allgemeinen bei mindestens 250 °C, vorzugsweise mindestens 300 °C und in besonders bevorzugter Weise bei mindestens 350 °C, sowie im Allgemeinen bei höchstens 500 °C, vorzugsweise höchstens 450 °C und in besonders bevorzugter Weise bei höchstens 410 °C. Die Kalzinationsdauer beträgt im Allgemeinen mindestens 10 Minuten, vorzugsweise mindestens 20 Minuten und in besonders bevorzugter Weise mindestens 30 Minuten sowie im Allgemeinen höchstens 12 Stunden, vorzugsweise höchstens 6 Stunden und in besonders bevorzugter Weise höchstens 4 Stunden. Der Trocknungsschritt c) und der Kalzinationsschritt d) können direkt ineinander übergehen.

Nach dem Trocknungsschritt c) oder dem Kalzinationsschritt d) wird die Adsorptionsmasse oder ihr Vorläufer im Formgebungsschritt e) mit üblichen Formgebungsverfahren wie Verstrangen, Tablettieren oder Pelletisieren zu Formkörpern wie Stränglingen oder Extrudaten, Tabletten oder - auch kugelförmigen - Pellets verarbeitet.

Nach dem Formgebungsschritt wird die Adsorptionsmasse oder ihr Vorläufer wahlweise einem Kalzinationsschritt f) unterzogen. Die in Schritt f) anzuwendenden Kalzinationsbedingungen sind mit denen des Kalzinationsschritts d) identisch.

Die Adsorptionsmasse wird im Zuge ihrer Herstellung mindestens einem der beiden Kalzinationsschritte d) oder f) unterzogen, wahlweise auch beiden. Bei dem oder den Kalzinationschritten wird der Adsorptionsmassenvorläufer zur eigentlichen Adsorptionsmasse umgewandelt und unter Anderem wie üblich auch die BET-Oberfläche und das Porenvolumen der Adsorptionsmasse eingestellt, wobei bekanntermaßen die BET-Oberfläche und das Porenvolumen mit steigender Kalzinationsdauer und Kalzinationstemperatur sinken.

Vorzugsweise wird zumindest insgesamt so lange kalziniert, dass der Gehalt der Adsorptionsmasse an Carbonat (berechnet als CO₃²⁻) höchstens 10 Gew.-%, bezogen auf das Gesamtgewicht des Kalzinationsprodukts beträgt, und ihre BET-Oberfläche einen Wert im Bereich von mindestens 40 und höchstens 100 m²/g aufweist. Das Porenvolumen der Adsorptionsmasse, gemessen als Wasseraufnahme, wird bei der Kalzination auf einen Wert von mindestens 0,05 ml/g eingestellt. Diese Werte sind für die erfindungsgemäße Adsorptionsmasse bevorzugt.

Die erfindungsgemäße Adsorptionsmasse kann auch, wie oben erwähnt, auf einem Träger abgeschieden werden. Dies geschieht durch übliche Tränkverfahren oder Auffällverfahren. Ein Auffällverfahren ist bekanntlich ein Fällverfahren in Gegenwart eines Trägers oder eines Trägervorläufers. Zur Durchführung eines Auffällverfahrens wird vorzugsweise im oben ausgeführten Fällverfahren der in Schritt a) hergestellten Lösung ein Träger oder Trägervorläufer zugesetzt. Falls der Träger bereits in Form von vorgeformten fertigen Formkörpern vorliegt, also ein reines Tränkverfahren entfällt der Formgebungsschritt e), ansonsten wird der Träger im Zuge der Verarbeitung des Vorprodukts der Adsorptionsmasse durch Fällung, Trocknung, Kalzinierung und Formgebung mit ausgebildet.

Ein bevorzugtes Tränkverfahren zur Herstellung der erfindungsgemäßen Adsorptionsmasse wird mit vorgeformten Trägern durchgeführt und umfasst die folgenden Verfahrensschritte in der genannten Reihenfolge:
a) Herstellen einer Lösung der Komponenten der Adsorptionsmasse und/oder von löslichen Ausgangsverbindungen davon;
b) Tränken eines vorgeformten Trägers mit dieser Lösung;
c) Trocknung des getränkten Trägers; und
d) Kalzination des getränkten und getrockneten Trägers,
wobei nach oder gleichzeitig mit Schritt d) Schritt
e) Einstellung des Reduktionsgrads des Kupfer enthaltenden Anteils der Adsorptionsmasse, ausgedrückt als Gewichtsverhältnis von metallischem Kupfer zur Summe aus metallischem Kupfer und Kupferoxiden, gerechnet als CuO, auf einen Wert von mindestens 45 % und höchstens 75 % durch Behandlung mit einem Kupferoxid reduzierenden Reduktionsmittel und/oder einem Kupfer oxidierenden Oxidationsmittel durchgeführt wird.

Verfahrensschritt a) dieses Tränkverfahrens wird wie der oben beschriebene Schritt a) des Fällverfahrens durchgeführt. In Schritt b) wird ein vorgeformter Träger mit der Lösung getränkt. Der vorgeformte Träger hat eine dem Einsatzzweck entsprechend gewählte Form, beispielsweise Stränglinge oder Extrudate, Tabletten oder - auch kugelförmige - Pellets. Die Tränkung wird entweder mit überstehender Lösung oder als Tränkung mit der dem Porenvolumen des Trägers entsprechenden Lösungsmenge ("incipient wetness") durchgeführt. Nach der Tränkung wird der getränkte Träger in Schritten c) und d) wie das Fällprodukt beim Fällverfahren getrocknet und kalziniert. Mit einem vorgeformten Träger sind, entfällt dabei der Formgebungsschritt.

Sowohl bei einem Fäll- als auch bei einem Tränkverfahren ist ein Schritt zur Einstellung des Reduktionsgrads des Kupfer enthaltenden Anteils erforderlich. Dies kann durch Einstellung entsprechender Verfahrensbedingungen bei der Kalzination (insbesondere Kalzination unter Kupfer nicht vollständig oxidierender Atmosphäre) oder in einem separaten Verfahrensschritt nach der Kalzination erfolgen, wobei in letzterem Fall die Einstellung des Reduktionsgrads nicht notwendigerweise unmittelbar nach der Kalzination erfolgen muss. Die Einstellung des Reduktionsgrads erfolgt mit jedem bekannten Verfahren, dass dazu geeignet ist, den Oxidationsgrad von Kupfer zu verändern. Liegt Kupfer vorwiegend in reduzierter Form vor, wird es mit Sauerstoff umgesetzt, liegt Kupfer überwiegend als Kupferoxid vor, mit Wasserstoff.

Meist wird die Kalzination unter Luft durchgeführt, Kupfer liegt im nach der Kalzination erhaltenen Vorläufer der erfindungsgemäßen Adsorptionsmasse folglich in Form von CuO vor. Der Reduktionsgrad wird dann durch Reduktion des Kupfers auf den gewünschten Reduktionsgrad eingestellt. Dies erfolgt durch Behandlung des nach der Kalzination vorliegenden Vorläufers mit einem Reduktionsmittel. Es kann jedes bekannte Reduktionsmittel eingesetzt werden, dass Kupfer reduzieren kann. Die genauen anzuwendenden Reduktionsbedingungen sind vom Vorläufer und seiner Zusammensetzung sowie vom verwendeten Reduktionsmittel abhängig und können in wenigen Routineversuchen leicht ermittelt werden. Ein bevorzugtes Verfahren ist die Behandlung des Vorläufers mit Wasserstoff, meist durch Überleiten eines Wasserstoff enthaltenden Gases, vorzugsweise ein Wasserstoff-/Stickstoff-Gemisches bei erhöhter Temperatur.

Es ist ebenso möglich, den Vorläufer der erfindungsgemäßen Adsorptionsmasse zuerst vollständig zu reduzieren und anschließend auf den gewünschten Reduktionsgrad zu oxidieren. Die vollständige Reduktion des Vorläufers der Adsorptionsmasse erfolgt durch Reduktion des in der Adsorptionsmasse enthaltenen Kupfers zu Kupfermetall. Dies kann im Prinzip durch jedes Reduktionsmittel erfolgen, das Kupfer aus den Oxidationsstufen I oder II zur Oxidationsstufe 0 reduzieren kann. Dies kann mit flüssigen oder gelösten Reduktionsmitteln erfolgen, in diesem Fall muss nach der Reduktion getrocknet werden. Sehr viel bequemer ist deshalb die Reduktion mit einem gasförmigen Reduktionsmittel, vor allem die Reduktion mit Wasserstoff durch Überleiten eines Wasserstoff enthaltenen Gases. Die hierbei anzuwendende Temperatur beträgt im Allgemeinen mindestens 80 °C, vorzugsweise mindestens 100 °C und in besonders bevorzugter Weise mindestens 110 °C sowie im Allgemeinen höchstens 200 °C, vorzugsweise höchstens 160 °C und in besonders bevorzugter Weise höchstens 130 °C erreicht. Eine geeignete Temperatur ist beispielsweise ca. 120 °C. Die Reduktion ist exotherm. Die Menge an zugeführtem Reduktionsmittel ist so einzustellen, dass das gewählte Temperaturfenster nicht verlassen wird. Der Verlauf der Aktivierung kann anhand der in der Schüttung des Adsorptionsmittels gemessenen Temperatur verfolgt werden ("temperaturprogrammierte Reduktion, TPR").

Eine bevorzugte Methode zur Reduzierung des Vorläufers der Adsorptionsmasse ist es, im Anschluss an eine unter einem Stickstoffstrom durchgeführte Trocknung die gewünschte Reduktionstemperatur einzustellen und dem Stickstoffstrom eine geringe Menge Wasserstoff beizumischen. Ein geeignetes Gasgemisch enthält zu Beginn beispielsweise mindestens 0,1 Vol.-% Wasserstoff in Stickstoff, vorzugsweise mindestens 0,5 Vol.-% und in besonders bevorzugter Weise mindestens 1 Vol.-%, sowie höchstens 10 Vol.-%, vorzugsweise höchstens 8 Vol.-% und in besonders bevorzugter Weise höchstens 5 Vol.-%. Ein geeigneter Wert ist beispielsweise 2 Vol.-%. Diese Anfangskonzentration wird entweder beibehalten oder erhöht, um das gewünschte Temperaturfenster zu erreichen und zu halten. Die Reduktion ist vollständig, wenn trotz konstantem oder steigendem Pegel des Reduktionsmittels die Temperatur in der Schüttung der Masse zurückgeht. Eine typische Reduktionsdauer beträgt im Allgemeinen mindestens 1 Stunde, vorzugsweise mindestens 10 Stunden und in besonders bevorzugter Weise mindestens 15 Stunden sowie im Allgemeinen höchstens 100 Stunden, vorzugsweise höchstens 50 Stunden und in besonders bevorzugter Weise höchstens 30 Stunden.

Die Trocknung des Vorläufers der Adsorptionsmasse, falls erforderlich, wird durch Heizen des Vorläufers auf eine Temperatur von im Allgemeinen mindestens 100 °C, vorzugsweise mindestens 150 °C und in besonders bevorzugter Weise mindestens 180 °C sowie im Allgemeinen höchstens 300 °C, vorzugsweise höchstens 250 °C und in besonders bevorzugter Weise höchstens 220 °C erreicht. Eine geeignete Trocknungstemperatur beträgt beispielsweise ca. 200 °C. Der Vorläufer wird so lange bei der Trocknungstemperatur gehalten, bis nur noch nicht mehr störende Reste anhaftender Feuchtigkeit vorhanden sind; dies ist im Allgemeinen bei einer Trocknungsdauer von mindestens 10 Minuten, vorzugsweise mindestens 30 Minuten und in besonders bevorzugter Weise mindestens 1 Stunde sowie im Allgemeinen höchstens 100 Stunden, vorzugsweise höchstens 10 Stunden und in besonders bevorzugter Weise höchstens 4 Stunden der Fall. Vorzugsweise findet die Trocknung in einem Gasstrom statt, um die Feuchtigkeit aus der Schüttung abzutransportieren. Dazu kann beispielsweise trockene Luft verwendet werden, besonders bevorzugt ist es jedoch, die Schüttung mit einem Inertgas zu durchströmen, geeignet sind hier insbesondere Stickstoff oder Argon.

Nach der vollständigen Reduktion wird der Reduktionsgrad durch Oxidation des Adsorptionsmassenvorläufers auf den gewünschten Wert eingestellt. Dies kann durch jedes bekannte Oxidationsmittel, das Kupfer oxidieren kann, erfolgen. Bequemerweise wird dazu Sauerstoff verwendet, insbesondere Luft oder ein Sauerstoff-/Stickstoff oder Luft-/Stickstoff-Gemisch ("Magerluft"). Eine bevorzugte Methode zur Oxidation des Vorläufers der Adsorptionsmasse ist es, nach der Reduktion die Wasserstoffzufuhr abzustellen, den vorhandenen Restwasserstoff mit Stickstoff aus dem Reaktionsgefäß zu spülen, dann im die gewünschte Oxidationstemperatur einzustellen und dem Stickstoffstrom eine geringe Menge Sauerstoff beizumischen. Temperatur, Gesamtgasmenge Sauerstoffgehalt und Behandlungsdauer müssen durch Routineversuche mit Bestimmung des Reduktionsgrads für den Einzelfall optimiert werden. Ein typisches geeignetes Gasgemisch enthält beispielsweise mindestens 0,05 Vol.-% Sauerstoff in Stickstoff, vorzugsweise mindestens 0,1 Vol.-% und in besonders bevorzugter Weise mindestens 0,15 Vol.-%, sowie höchstens 0,5 Vol.-%, vorzugsweise höchstens 0,4 Vol.-% und in besonders bevorzugter Weise höchstens 0,25 Vol.-%. Ein geeigneter Wert ist beispielsweise 0,2 Vol.-%. Eine typische Oxidationsdauer beträgt im Allgemeinen mindestens 24 Stunden, vorzugsweise mindestens 48 Stunden und in besonders bevorzugter Weise mindestens 60 Stunden sowie im Allgemeinen höchstens 100 Stunden, vorzugsweise höchstens 90 Stunden und in besonders bevorzugter Weise höchstens 80 Stunden. Beispielsweise wird über 70 Stunden oxidiert. Die anzuwendende Gasmenge beträgt typischerweise im Allgemeinen mindestens 2 000 Nl Gas pro Liter Adsorptionsmassenvorläufer und Stunde (Nl = Normliter, d.h. bezogen auf 0°C und Normaldruck), vorzugsweise mindestens 2 500 Nl/l*h und in besonders bevorzugter Form mindestens 2 800 Nl/l*h sowie im Allgemeinen höchstens 4000 Nl/l*h, in bevorzugter Form höchstens 3500 Nl/l*h und in besonders bevorzugter Form höchstens 3 200 Nl/lh. Beispielsweise sind 3000 Nl/l*h gut geeignet. Die eingestellte Temperatur beträgt im Allgemeinen mindestens 30 °C, vorzugsweise mindestens 35 °C und in besonders bevorzugter Form mindestens 40 °C sowie im Allgemeinen höchstens 80 °C, vorzugsweise höchstens 70 °C und in besonders bevorzugter Form höchstens 60 °C. Beispielsweise sind 50 °C gut geeignet.

Die Adsorptionsmassen-Formkörper werden zu ihrer Verwendung in einen üblicherweise als "Adsorber", gelegentlich auch "Reaktor" bezeichneten Behälter gefüllt, in dem sie mit dem zu reinigenden Stoffstrom in Kontakt gebracht werden.

Die fertige Adsorptionsmasse wird vorzugsweise vor ihrem Einsatz zur Adsorption von CO (ggf. nochmals) getrocknet, um Spuren anhaftender Feuchtigkeit zu entfernen und die Adsorptionskapazität zu erhöhen. Die Trocknung der fertigen Adsorptionsmasse wird wie die oben beschriebene Trocknung ihres Vorläufers durchgeführt.

Bequemerweise führt man die Einstellung des Reduktionsgrads und die Trocknung im Adsorber durch, da ansonsten ein hoher Aufwand nötig ist, um die einsatzfertige aktivierte Adsorptionsmasse beim Einfüllen in den Adsorber vor Luft und Feuchtigkeit zu schützen.

Im Anschluss an die Einstellung des Reduktionsgrads sowie einer eventuell vor oder nach dem Einstellen des Reduktionsgrads durchgeführten Trocknung ist die erfindungsgemäße Adsorptionsmasse einsatzbereit.

Das erfindungsgemäße adsorptive Verfahren ist ein Verfahren zur Entfernung von Kohlenmonoxid aus Stoffströmen durch Adsorption, das dadurch gekennzeichnet ist, dass man den Kohlenmonoxid enthaltenden Stoffstrom mit einer Adsorptionsmasse in Kontakt bringt, die Kupfer-, Zink- und Zirkonoxide enthält und die ihrerseits dadurch gekennzeichnet ist, dass das ihr Kupfer enthaltender Anteil einen Reduktionsgrad, ausgedrückt als Gewichtsverhältnis von metallischem Kupfer zur Summe aus metallischem Kupfer und Kupferoxiden, gerechnet als CuO, von mindestens 45 % und höchstens 75 % aufweist.. Das erfindungsgemäße adsorptive Verfahren ist also durch die Verwendung der erfindungsgemäßen Adsorptionsmasse gekennzeichnet. Ein Vorzug des erfindungsgemäßen adsorptiven Verfahrens ist seine Anwendbarkeit auf Stoffströme, die entweder sauerstofffrei sind, bei einer Temperatur vorliegen, die für die übliche katalytische Umsetzung von Kohlenmonoxid mit Sauerstoff zu Kohlendioxid nicht ausreicht, oder bei deren weiterer Verwendung Kohlendioxid oder Oxygenate stören.

Im Prinzip kann mit dem erfindungsgemäßen adsorptiven Verfahren jeder Stoffstrom von Verunreinigungen durch Kohlenmonoxid befreit werden, beispielsweise Inertgasströme (Stickstoff, Helium, Neon, Krypton, Xenon und/oder Argon) oder Kohlenwasserstoffströme wie beispielsweise Alkane (Methan, Ethan, Propan, Butan, ihre Gemische, Isomeren und Isomerengemische) oder Alkene (auch "Olefine" genannt) wie Ethen, Propen, 1- Buten, 2-Buten, 1,3-Butadien und/oder Styrol.

Es ist ebenso möglich, die erfindungsgemäße Adsorptionsmasse in nicht-adsorptiver Weise zur Entfernung von Kohlenmonoxid zu verwenden. Dies ist insbesondere vorteilhaft, wenn der von Kohlenmonoxid zu befreiende Stoffstrom neben Kohlenmonoxid auch Sauerstoff enthält, bei einer für die katalytische Umsetzung von Sauerstoff mit Kohlenmonoxid ausreichend hohen Temperatur vorliegt, und bei seiner weiteren Verwendung Kohlendioxid oder Oxygenate nicht stören. So kann Kohlenmonoxid aus Kohlenmonoxid und Sauerstoff enthaltenden Stoffströmen durch katalytische Umsetzung von Kohlenmonoxid mit Sauerstoff an der als Katalysator verwendeten erfindungsgemäßen Adsorptionsmasse zu Kohlendioxid umgesetzt und so aus dem Stoffstrom entfernt werden. Ebenso kann Kohlenmonoxid aus Kohlenmonoxid enthaltenden Stoffströmen durch Umsetzung von Kohlenmonoxid mit einer Kupfer(I)- und/oder Kupfer(II)oxid enthaltenden erfindungsgemäßen Adsorptionsmasse unter Bildung von metallischem Kupfer zu Kohlendioxid aus dem Stoffstrom entfernt werden. Genauso ist es möglich, Sauerstoff aus Stoffströmen durch Absorption an der erfindungsgemäßen, metallisches Kupfer enthaltenden Adsorptionsmasse unter Bildung von Kupfer(I)oxid und/oder Kupfer(II)oxid zu entfernen, oder bei Anwesenheit von Wasserstoff durch vom Kupfer katalysierte Bildung von Wasser. Wie mit anderen Kupfer enthaltenden Massen können auch mit der erfindungsgemäßen Adsorptionsmasse nicht nur Kohlenmonoxid, Sauerstoff und mit letzterem auch Wasserstoff, sondern auch sonstige mit Kupfer oder Kupferoxid reagierende Verunreinigungen wie beispielsweise elementares Quecksilber und/oder Quecksilber, Schwefel, Antimon und/oder Arsen enthaltende Verbindungen aus Stoffströmen entfernt werden. Mit anderen Worten: Die erfindungsgemäße Adsorptionsmasse kann in allen bekannten Verfahren eingesetzt werden, in denen Kupfer enthaltende Festkörper katalytisch, absorptiv oder als Reaktionspartner verwendet werden.

Bevorzugterweise wird das erfindungsgemäße adsorptive Verfahren zur Entfernung von Kohlenmonoxid aus Alkenströmen verwendet, insbesondere zur Entfernung von Kohlenmonoxid aus Alkenströmen, die üblicherweise flüssig vorliegen. Flüssig vorliegende Alkene haben typischerweise - abgesehen von der Anwendung unüblich hoher Drücke - nicht die zur katalytischen Entfernung von Kohlenmonoxid durch Umsetzung mit Sauerstoff notwendige Temperatur, zudem würde bei der anschließenden Verwendung zur Polymerisation die Oxygenatbildung stören.

Besonders geeignet ist das erfindungsgemäße adsorptive Verfahren zur Entfernung von Kohlenmonoxid aus Propen, 1-Buten, 2-Buten, 1,3-Butadien, Butengemischen, Buten-/Butadiengemischen oder Styrol, um den Kohlenmonoxidgehalt auf den für "polymer grade"-Olefine zulässige Werte zu senken. In einer ganz besonders bevorzugten Ausführungsform wird mit dem erfindungsgemäßen Verfahren Kohlenmonoxid aus flüssigem Propen adsorptiv entfernt.

Das erfindungsgemäße adsorptive Verfahren ermöglicht die Entfernung von Kohlenmonoxid aus Stoffströmen. Es ist besonders geeignet zur Entfernung von Kohlenmonoxid aus Stoffströmen, die im Allgemeinen mindestens 0,001 ppm (bei Gasen Vol.-ppm, bei Flüssigkeiten Gew.-ppm), vorzugsweise mindestens 0,01 ppm, sowie im Allgemeinen höchstens 1000 ppm, vorzugsweise höchstens 100 ppm und in besonders bevorzugter Weise höchstens 10 ppm Kohlenmonoxid enthalten. Für relativ hohe Anfangskonzentrationen an Kohlenmonoxid ist es meist wirtschaftlicher, vorab ein anderes bekanntes Reinigungsverfahren wie Destillation, katalytische Oxidation des Kohlenmonoxids mit Sauerstoff zu Kohlendioxid oder Oxidation des Kohlenmonoxids mit Kupferoxid unter Bildung von metallischem Kupfer und Kohlendioxid, wahlweise mit nachfolgender Abtrennung von Kohlendioxid und Oxygenaten durchzuführen, da sonst die Adsorptionskapazität der Adsorptionsmasse zu schnell erreicht werden kann.

Zur Durchführung des erfindungsgemäßen adsorptiven Verfahrens wird der von Kohlenmonoxid zu befreiende Stoffstrom im Adsorber über die Schüttung der erfindungsgemäßen Adsorptionsmassen-Formkörper geleitet.

Die Temperatur ist für das erfindungsgemäße adsorptive Verfahren aus technischer Sicht nicht oder nur wenig kritisch. Typische Temperaturen liegen im Bereich von mindestens -270 °C, vorzugsweise mindestens -100 °C und in besonders bevorzugter Weise bei -40 °C, sowie höchstens 300 °C, vorzugsweise höchstens 200 °C und in besonders bevorzugter Weise höchstens 100 °C. Bequemerweise wird die Temperatur nicht gesondert beeinflusst, sondern bei der Temperatur gearbeitet, die der zu behandelnde Stoffstrom hat.

Der wesentliche Parameter, mit dem der Abreicherungsgrad bestimmt wird, ist - neben der wie beschrieben bequemerweise nicht besonders beeinflussten Temperatur - die Kontaktzeit zwischen Stoffstrom und Adsorptionsmasse. Diese Kontaktzeit wird durch die Geschwindigkeit des Stoffstroms und das Volumen des Adsorptionsmassen-Betts bestimmt. Meist wird der Volumenstrom des zu reinigenden Stoffstroms durch die Kapazität voran- oder nachgeschalteter Anlagen vorgegeben sein. Weiterhin ist die Adsorptionskapazität der Adsorptionsmasse begrenzt, so dass eine bestimmte Menge Adsorptionsmasse lediglich über einen bestimmten Zeitraum für das erfindungsgemäße Verfahren benutzt werden kann, bevor sie regeneriert werden muss. Dies macht zwar zunächst die Verwendung einer möglichst großen Menge Adsorptionsmasse wünwünschenswert, dem stehen allerdings die mit der Adsorbergröße steigenden Kosten entgegen. Die Menge an Adsorptionsmasse im Adsorber wird deshalb im Einzelfall so gewählt, dass einerseits der gewünschte Abreicherungsgrad und andererseits eine tolerierbar kurze Betriebszeit eines Adsorbers zwischen zwei Regenerierungen der Adsorptionsmasse erreicht werden. Vorteilhafterweise werden mindestens zwei Adsorber vorgesehen, von denen mindestens einer mit zu reinigendem Stoffstrom beaufschlagt werden kann, während die Adsorptionsmasse in mindestens einem anderen regeneriert wird. Dies ist eine routinemäßige Optimierungsaufgabe für den Fachmann.

Je nach der gewählten Adsorbergröße wird die maximale Aufnahmekapazität der darin enthaltenen Adsorptionsmasse für Kohlenmonoxid früher oder später erreicht, so dass sie regeneriert werden muss.

Zur Regenerierung der erfindungsgemäßen Adsorptionsmasse wird zunächst der zu reinigende Stoffstrom abgestellt, vorzugsweise wird er in einen parallelen, mit frischer oder regenerierter Adsorptionsmasse gefüllten Adsorber geleitet.

Die zu regenerierende Adsorptionsmasse wird anschließend regeneriert. Dies geschieht durch Desorption. Dabei ist es unerheblich, ob vor der Desorption das adsorbierte Kohlenmonoxid katalytisch mit möglicherweise adsorbiertem Sauerstoff oder rein chemisch durch Reaktion mit in der Adsorptionsmasse vorhandenem Kupferoxid zu Kohlendioxid oder auf andere Weise, etwa mit etwaige vorhandenem Wasserstoff zu Methanol oder Methan abreagiert, und diese Reaktionsprodukte anschließend desorbieren, wesentlich ist die Wiederherstellung der Adsorptionskapazität der Adsorptionsmasse.

Die Desorption wird durch Überleiten eines Fluids, vorzugsweise eines Gases, durch Erhöhen der Temperatur oder durch eine Kombination dieser Maßnahmen durchgeführt. In bevorzugter Weise wird der Adsorber mit der zu regenerierenden Adsorptionsmasse mit einem Gas durchströmt und dabei aufgeheizt. Das Gas kann inert sein wie beispielsweise Stickstoff, Methan oder Argon, es ist jedoch auch möglich, Wasserstoff zu verwenden, in diesem Fall wird das CO zu Methanol oder Methan umgesetzt. Die Desorptionstemperatur wird im Allgemeinen auf einen Wert von mindestens 50 °C, vorzugsweise mindestens 100 °C und in besonders bevorzugter Weise mindestens 150 °C sowie im Allgemeinen höchstens 500 °C, vorzugsweise höchstens 450 °C und in besonders bevorzugter Weise höchstens 400 °C eingestellt. Beispielsweise ist eine Desorptionstemperatur von ca. 300 °C geeignet. Die Dauer der Regenerierung ist typischerweise im Allgemeinen mindestens 1 Stunde, vorzugsweise mindestens 10 Stunden und in besonders bevorzugter Weise mindestens 15 Stunden sowie im Allgemeinen höchstens 100 Stunden, vorzugsweise höchstens 50 Stunden und in besonders bevorzugter Weise höchstens 30 Stunden.

Um aus dem Kupfer verlorenen Sauerstoff zu ersetzen, ist es oft vorteilhaft, die Desorption mit einem Inertgas durchzuführen - bevorzugt sind Stickstoff oder Argon - , das in Spuren Sauerstoff enthält. Bequemerweise wird zur Desorption Stickstoff verwendet, der im Allgemeinen Sauerstoff in einer Menge von mindestens 1 ppm, vorzugsweise mindestens 5 ppm und in besonders bevorzugter Weise mindestens 10 ppm sowie im Allgemeinen höchstens 300 ppm, vorzugsweise höchstens 250 ppm und in besonders bevorzugter Weise höchstens 200 ppm enthält.

Die eigentliche Desorption kann auch mit dem Entfernen restlichen zu reinigenden Stoffstroms aus dem Adsorber durch Spülen des Adsorbers, zweckmäßigerweise mit dem zur Desorption verwendeten Gasstrom bei Normaltemperatur eingeleitet werden.

Im Anschluss an diese Regenerierung ist die Adsorptionsmasse im Allgemeinen sofort zum erneuten Einsatz bereit. Im Einzelfall - insbesondere wenn sich der gewünschte Reduktionsgrad zu stark verändert hat - kann es empfehlenswert oder erforderlich sein, die Adsorptionsmasse einer erneuten Einstellung des Reduktionsgrads zu unterziehen.

Mit der erfindungsgemäßen Adsorptionsmasse und dem erfindungsgemäßen adsorptiven Verfahren ist es möglich, Kohlenmonoxid aus Stoffströmen einfach und in wirtschaftlicher Weise zu entfernen. Die so gereinigten Stoffströme können anschließend bestimmungsgemäß verwendet werden.

## Patentansprüche

1. Kupfer-, Zink- und Zirkonoxide enthaltende Adsorptionsmasse, **dadurch gekennzeichnet, dass** ihr Kupfer enthaltender Anteil einen Reduktionsgrad, ausgedrückt als Gewichtsverhältnis von metallischem Kupfer zur Summe aus metallischem Kupfer und Kupferoxiden, gerechnet als CuO, von mindestens 45 % und höchstens 75 % aufweist.

2. Adsorptionsmasse nach Anspruch 1, die Kupfer in einer Menge, die 30 bis 99,8 Gew.-% CuO, Zink in einer Menge, die 0,1 bis 69,9 Gew.-% ZnO und Zirkon in einer Menge, die 0,1 bis 69,9 Gew.-% ZrO₂ entspricht, enthält, jeweils bezogen auf die Gesamtmenge der Adsorptionsmasse.

3. Adsorptionsmasse nach Anspruch 2, die im wesentlichen aus Kupfer in einer Menge, die 30 bis 99,8 Gew.-% CuO, Zink in einer Menge, die 0,1 bis 69,9 Gew.-% ZnO und Zirkon in einer Menge, die 0,1 bis 69,9 Gew.-% ZrO₂ entspricht, besteht, jeweils bezogen auf die Gesamtmenge der Adsorptionsmasse, wobei sich die Anteile der einzelnen Komponenten zu 100 Gew.-% addieren.

4. Adsorptionsmasse nach einem der Ansprüche 1, 2, oder 3 auf einem inerten Träger.

5. Adsorptionsmasse nach einem der Ansprüche 1 bis 4, **dadurch gekennzeichnet, dass** Zink in Form von Zinkoxid und Zirkon in Form von Zirkondioxid vorliegen.

6. Verfahren zur Entfernung von Kohlenmonoxid aus Kohlenmonoxid enthaltenden Stoffströmen durch Adsorption an einer Adsorptionsmasse, **dadurch gekennzeichnet, dass** man den Kohlenmonoxid enthaltenden Stoffstrom mit einer in den Ansprüchen 1 bis 5 definierten Adsorptionsmasse in Kontakt bringt.

7. Verfahren nach Anspruch 6, **dadurch gekennzeichnet, dass** man Kohlenmonoxid aus einem flüssigem Propylenstrom entfernt.

8. Verfahren nach Anspruch 6, **dadurch gekennzeichnet, dass** der Kohlenmonoxid enthaltende Stoffstrom auch Sauerstoff enthält.

9. Verfahren zur Herstellung der in den Ansprüchen 1 bis 5 definierten Adsorptionsmasse, umfassend die folgenden Verfahrensschritte in der genannten Reihenfolge:
a) Herstellen einer Lösung der Komponenten der Adsorptionsmasse und/oder von löslichen Ausgangsverbindungen davon;
b) Fällen eines Festkörpers aus dieser Lösung durch Zugabe einer Base;
c) Abtrennung und Trocknung des Festkörpers;
d) wahlweise eine Kalzination des Festkörpers;
e) Verformung des Festkörpers zu Formkörpern;
f) wahlweise eine Kalzination der Formkörper; und
mit der Maßgabe, dass mindestens einer der beiden Kalzinationsschritte d) oder
f) durchgeführt wird, **dadurch gekennzeichnet, dass** es einen nach oder gleichzeitig mit Verfahrensschritt f) durchzuführenden Verfahrensschritt
g) Einstellung des Reduktionsgrads des Kupfer enthaltenden Anteils der Adsorptionsmasse, ausgedrückt als Gewichtsverhältnis von metallischem Kupfer zur Summe aus metallischem Kupfer und Kupferoxiden, gerechnet als CuO, auf einen Wert von mindestens 45 % und höchstens 75 % durch Behandlung mit einem Kupferoxid reduzierenden Reduktionsmittel und/oder einem Kupfer oxidierenden Oxidationsmittel
umfasst.

10. Verfahren zur Herstellung der in Anspruch 5 definierten Adsorptionsmasse, umfassend die folgenden Verfahrensschritte in der genannten Reihenfolge:
a) Herstellen einer Lösung der Komponenten der Adsorptionsmasse und/oder von löslichen Ausgangsverbindungen davon;
b) Tränken eines vorgeformten inerten Trägers mit dieser Lösung;
c) Trocknung des getränkten Trägers; und
d) Kalzination des getränkten und getrockneten Trägers.
**dadurch gekennzeichnet, dass** es einen nach oder gleichzeitig mit Verfahrensschritt d) durchzuführenden Verfahrensschritt
e) Einstellung des Reduktionsgrads des Kupfer enthaltenden Anteils der Adsorptionsmasse, ausgedrückt als Gewichtsverhältnis von metallischem Kupfer zur Summe aus metallischem Kupfer und Kupferoxiden, gerechnet als CuO, auf einen Wert von mindestens 45 % und höchstens 75 % durch Behandlung mit einem Kupferoxid reduzierenden Reduktionsmittel und/oder einem Kupfer oxidierenden Oxidationsmittel
umfasst.

11. Verfahren zur Regenerierung der in den Ansprüchen 1 bis 5 definierten Adsorptionsmasse nach ihrer Verwendung zur adsorptiven Entfernung von Kohlenmonoxid aus Kohlenmonoxid enthaltenden Stoffströmen, **dadurch gekennzeichnet, dass** man die Adsorptionsmasse auf eine Temperatur im Bereich von 50 bis 500 °C erwärmt und/oder eine Schüttung der zu regenerierenden Adsorptionsmasse mit einem Gas durchströmt.

## Claims

1. An adsorption composition comprising copper, zinc and zirconium oxides, wherein the copper-comprising component has a degree of reduction, expressed as weight ratio of metallic copper to the sum of metallic copper and copper oxides, calculated as CuO, of at least 45% and not more than 75%.

2. The adsorption composition according to claim 1 which comprises copper in an amount corresponding to from 30 to 99.8% by weight of CuO, zinc in an amount corresponding to from 0.1 to 69.9% by weight of ZnO and zirconium in an amount corresponding to from 0.1 to 69.9% by weight of ZrO₂, in each case based on the total amount of the adsorption composition.

3. The adsorption composition according to claim 2 which consists essentially of copper in an amount corresponding to from 30 to 99.8% by weight of CuO, zinc in an amount corresponding to from 0.1 to 69.9% by weight of ZnO and zirconium in an amount corresponding to from 0.1 to 69.9% by weight of ZrO₂, in each case based on the total amount of the adsorption composition, with the proportions of the individual components adding up to 100% by weight.

4. The adsorption composition according to any of claims 1, 2 and 3 on an inert support.

5. The adsorption composition according to any of claims 1 to 4, wherein zinc is present in the form of zinc oxide and zirconium is present in the form of zirconium dioxide.

6. A method of removing carbon monoxide from streams comprising carbon monoxide by adsorption on an adsorption composition, wherein the stream comprising carbon monoxide is brought into contact with an adsorption composition as defined in any of claims 1 to 5.

7. The method according to claim 6, wherein carbon monoxide is removed from a liquid propylene stream.

8. The method according to claim 6, wherein the stream comprising carbon monoxide also comprises oxygen.

9. A process for producing the adsorption composition defined in any of claims 1 to 5, which comprises the following process steps in the indicated order:
a) preparation of a solution of the components of the adsorption composition and/or of soluble starting compounds thereof;
b) precipitation of a solid from this solution by addition of a base;
c) isolation and drying of the solid;
d) if desired calcination of the solid;
e) shaping of the solid to give shaped bodies; and
f) if desired calcination of the shaped bodies;
with the proviso that at least one of the two calcination steps d) or f) is carried out, wherein the process comprises a process step
g) setting of the degree of reduction of the copper-comprising component of the adsorption composition, expressed as weight ratio of metallic copper to the sum of metallic copper and copper oxides, calculated as CuO, to a value of at least 45% and not more than 75% by treatment with a copper oxide-reducing reducing agent and/or a copper-oxidizing oxidizing agent
to be carried out after or simultaneously with process step f).

10. A process for producing the adsorption composition defined in claim 5, which comprises the following process steps in the indicated order:
a) preparation of a solution of the components of the adsorption composition and/or of soluble starting compounds thereof;
b) impregnation of a preformed inert support with the solution;
c) drying of the impregnated support; and
d) calcination of the impregnated and dried support,
wherein the process comprises a process step
e) setting of the degree of reduction of the copper-comprising component of the adsorption composition, expressed as weight ratio of metallic copper to the sum of metallic copper and copper oxides, calculated as CuO, to a value of at least 45% and not more than 75% by treatment with a copper oxide-reducing reducing agent and/or a copper-oxidizing oxidizing agent
to be carried out after or simultaneously with process step d).

11. A method of regenerating the adsorption composition defined in any of claims 1 to 5 after it has been used for the adsorptive removal of carbon monoxide from streams comprising carbon monoxide, wherein the adsorption composition is heated to a temperature in the range from 50 to 500°C and/or a gas is passed through a bed of the adsorption composition to be regenerated.

## Revendications

1. Matériau d'adsorption contenant des oxydes de cuivre, de zinc et de zirconium, **caractérisé en ce que** sa fraction contenant du cuivre présente un degré de réduction, exprimé comme le rapport en poids entre le cuivre métallique et la somme du cuivre métallique et des oxydes de cuivre, calculés en tant que CuO, d'au moins 45 % et d'au plus 75 %.

2. Matériau d'adsorption selon la revendication 1, qui contient du cuivre en une quantité qui correspond à 30 à 99,8 % en poids de CuO, du zinc en une quantité qui correspond à 0,1 à 69,9 % en poids de ZnO et du zirconium en une quantité qui correspond à 0,1 à 69,9 % en poids de ZrO₂, à chaque fois par rapport à la quantité totale du matériau d'adsorption.

3. Matériau d'adsorption selon la revendication 2, qui est essentiellement constitué par du cuivre en une quantité qui correspond à 30 à 99,8 % en poids de CuO, du zinc en une quantité qui correspond à 0,1 à 69,9 % en poids de ZnO et du zirconium en une quantité qui correspond à 0,1 à 69,9 % en poids de ZrO₂, à chaque fois par rapport à la quantité totale du matériau d'adsorption, la somme des proportions des composants individuels étant de 100 % en poids.

4. Matériau d'adsorption selon l'une quelconque des revendications 1, 2 ou 3, sur un support inerte.

5. Matériau d'adsorption selon l'une quelconque des revendications 1 à 4, **caractérisé en ce que** le zinc se présente sous la forme d'oxyde de zinc et le zirconium sous la forme de dioxyde de zirconium.

6. Procédé d'élimination de monoxyde de carbone de courants de matière contenant du monoxyde de carbone par adsorption sur un matériau d'adsorption, **caractérisé en ce que** le courant de matière contenant du monoxyde de carbone est mis en contact avec un matériau d'adsorption défini dans les revendications 1 à 5.

7. Procédé selon la revendication 6, **caractérisé en ce que** du monoxyde de carbone est éliminé d'un courant de propylène liquide.

8. Procédé selon la revendication 6, **caractérisé en ce que** le courant de matière contenant du monoxyde de carbone contient également de l'oxygène.

9. Procédé de fabrication du matériau d'adsorption défini dans les revendications 1 à 5, comprenant les étapes de procédé suivantes dans l'ordre indiqué :
a) la fabrication d'une solution des composants du matériau d'adsorption et/ou de composés de départ solubles de ceux-ci ;
b) la précipitation d'un corps solide à partir de cette solution par ajout d'une base ;
c) la séparation et le séchage du corps solide ;
d) éventuellement une calcination du corps solide ;
e) le façonnage du corps solide en corps moulés ;
f) éventuellement une calcination des corps moulés ;
à condition qu'au moins une des deux étapes de calcination d) ou f) soit réalisée, **caractérisé en ce qu'**il comprend une étape de procédé
g) l'ajustement du degré de réduction de la fraction contenant du cuivre du matériau d'adsorption, exprimé comme le rapport en poids entre le cuivre métallique et la somme du cuivre métallique et des oxydes de cuivre, calculés en tant que CuO, à une valeur d'au moins 45 % et d'au plus 75 % par traitement avec un réducteur qui réduit l'oxyde de cuivre et/ou un oxydant qui oxyde le cuivre,
réalisée après ou simultanément avec l'étape de procédé f) .

10. Procédé de fabrication du matériau d'adsorption défini dans la revendication 5, comprenant les étapes de procédé suivantes dans l'ordre indiqué :
a) la fabrication d'une solution des composants du matériau d'adsorption et/ou de composés de départ solubles de ceux-ci ;
b) l'imprégnation d'un support inerte pré-façonné avec cette solution ;
c) le séchage du support imprégné ; et
d) la calcination du support imprégné et séché, **caractérisé en ce qu'**il comprend une étape de procédé
e) l'ajustement du degré de réduction de la fraction contenant du cuivre du matériau d'adsorption, exprimé comme le rapport en poids entre le cuivre métallique et la somme du cuivre métallique et des oxydes de cuivre, calculés en tant que CuO, à une valeur d'au moins 45 % et d'au plus 75 % par traitement avec un réducteur qui réduit l'oxyde de cuivre et/ou un oxydant qui oxyde le cuivre,
réalisée après ou simultanément avec l'étape de procédé d) .

11. Procédé de régénération du matériau d'adsorption défini dans les revendications 1 à 5 après son utilisation pour l'élimination par adsorption de monoxyde de carbone de courants de matière contenant du monoxyde de carbone, **caractérisé en ce que** le matériau d'adsorption est porté à une température dans la plage allant de 50 à 500 °C et/ou un garnissage du matériau d'adsorption à régénérer est traversé par un gaz.
